# EUROPEAN PATENT APPLICATION

(11) **EP 1 944 274 A1**
(43) Date of publication of application: **16.07.2008**
(21) Application number: 07150302.3
(22) Date of filing: 21.12.2007
(51) Int. Cl.: C03B 33/07

(54) **Method and Machine for cutting laminated glass**

(30) Priority: 22.12.2006 IT TO20060922
(71) Applicant: BOTTERO S.p.A., 12100 Cuneo (IT)
(72) Inventor: BERTOLINO, Valerio, 12040, MOROZZO (IT); MARGARIA, Pierfranco, 10094, VALGIOIE (IT)
(74) Representative: Jorio, Paolo

(57) **Abstract**

A sheet (2) of laminated glass, having two outer sheets of glass (3,4) and an intermediate layer (5) of synthetic material, is cut by forming a score line in both the outer sheets (3,4) of glass; breaking, by flexing, the outer sheets (3,4) of glass into two sheet portions (1a,1b) joined by the intermediate layer (5) of material; heating the intermediate layer of material between the sheet portions by means of a heat source (37); and cutting the intermediate layer of material to separate the sheet portions; scoring at least one (3) of the outer sheets of glass (3,4) , and breaking of the same outer sheet (3) of glass being performed simultaneously.
Furthermore actuating means comprising guide means are disclosed for guiding the heat source along a sloping plane forming a given angle with a supporting surface for the laminated glass sheet.

## Description

The present invention relates to a method of cutting sheets of laminated glass.

Sheets of laminated glass, of the type comprising two outer sheets of glass and an intermediate sheet or layer of synthetic material, are known to be cut on breaking machines comprising a supporting surface for supporting the work sheet; and two movable carriages located on opposite sides of the work sheet, and each supporting a score wheel for making a respective score line in the relative sheet of glass, and a break wheel for breaking the opposite sheet of glass to that on which it acts, so as to form two sheet portions joined by the sheet of synthetic material. Known machines also comprise an electric heating resistor located on one side of the sheet and rotating, about a fixed hinge axis, between a lowered rest position, and a raised heating position, in which it heats the synthetic material preparatory to cutting it.

The sheet is cut as follows. Starting with the work sheet positioned on the supporting surface, and with the two carriages facing each other at a start or zero station at one end of the work sheet, the score wheels are pressed onto the outer sheets of glass, and the carriages are advanced along a rail to form a respective score line in each outer sheet. Once scoring is completed, and before moving the carriages back to the zero position, the score wheels are detached from the relative sheets, and the break wheel on the opposite side to the resistor is pushed onto the sheet, so that the sheet facing the resistor is broken as the carriages move back. On reaching the zero position, the break wheel is withdrawn, the other break wheel is brought forward, and the relative carriage is advanced again to break the other outer sheet. At this point, the break wheel is withdrawn, and the relative carriage is moved back to the zero position; on reaching which, the resistor is moved into the raised position, is activated and kept in the raised position until the intermediate sheet is heated as required, after which, the sheet portions are parted and the intermediate sheet cut in known manner.

In a different method, one of the outer sheets, after being scored, is broken by a break bar, which is moved between a movable withdrawn rest position and a forward pressure position.

In yet another method, one of the outer sheets of glass is broken using a supporting surface and relative locators defining two movable, independent retaining assemblies, and, once scoring is completed, by moving the retaining assemblies with respect to each other so as to flex and break the sheet.

Though widely used, the above known cutting methods are unsatisfactory, mainly on account of posing a limit to how fast the cutting cycle can be performed, and so preventing an increase in output.

In some of the above known cutting methods, reducing cutting time is made even more difficult by having to wait until both the outer sheets of glass are broken or the carriages are moved back to the zero position before moving the electric resistor into the raised heating position, which, in fact, depends on the carriages being located in the zero position to prevent interference or collision.

It is an object of the present invention to provide a method of cutting sheets of laminated glass, designed to provide a straightforward solution to the above problem, and which, in particular, provides for reducing cycle time and so increasing output.

According to the present invention, there is provided a method of cutting sheets of laminated glass comprising two outer sheets of glass and an intermediate layer of synthetic material, the method comprising the steps of forming a score line in both said outer sheets of glass; breaking, by flexing, the outer sheets of glass into two sheet portions joined by the intermediate layer of material; heating the intermediate layer of material connecting said sheet portions by means of a heat source; and cutting the intermediate layer of material to separate said sheet portions; characterized in that scoring at least a first of said outer sheets of glass, and breaking the first outer sheet of glass are performed simultaneously.

The present invention also relates to a machine for breaking sheets of laminated glass.

According to the present invention, there is provided a machine for cutting sheets of laminated glass comprising two outer sheets of glass and an intermediate layer of synthetic material, the machine comprising a supporting surface for supporting said sheet of laminated glass; scoring means for forming a score line in each of said outer sheets of glass; breaking means for breaking both said outer sheets of glass along the respective score lines into two sheet portions; and cutting means for cutting said intermediate layer, said cutting means comprising at least one heat source, and actuating means for moving the heat source between a forward work position and a withdrawn rest position; characterized in that said actuating means comprise guide means for guiding said heat source along a sloping plane forming a given angle with said supporting surface.

A non-limiting embodiment of the invention will be described by way of example with reference to the accompanying drawings, in which:
Figure 1 shows a partly sectioned side view, substantially in block form, of a preferred embodiment of the machine for cutting sheets of laminated glass and implementing the method according to the teachings of the present invention;
Figure 2 shows a larger-scale view in perspective of a detail in Figure 1.

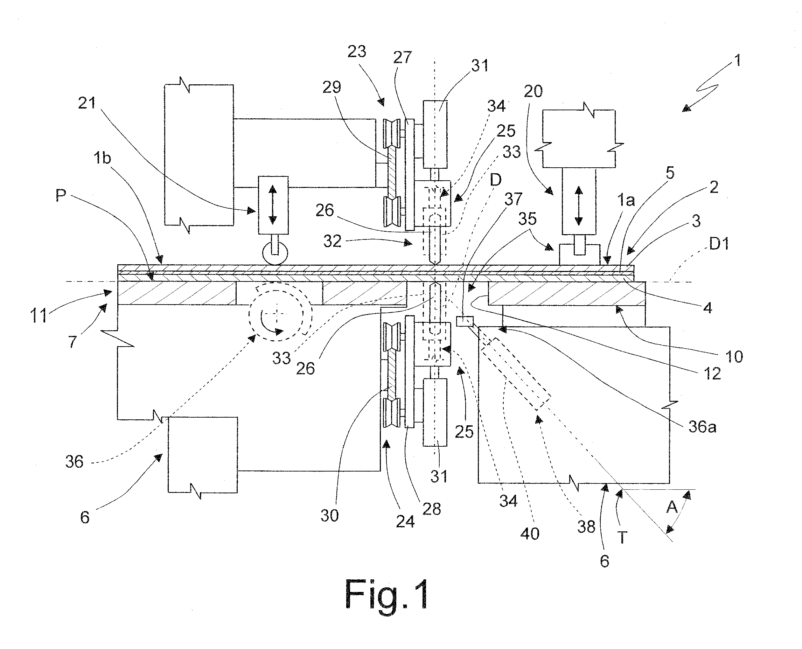

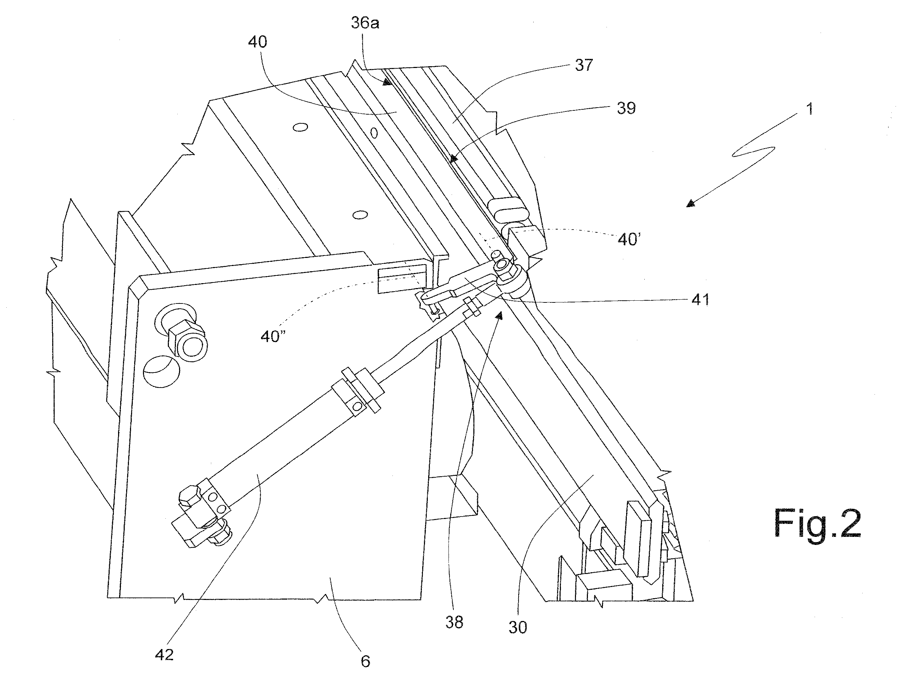

Number 1 in Figures 1 and 2 indicates as a whole a machine for cutting a sheet 2 of laminated glass comprising a top outer sheet of glass 3, a bottom outer sheet of glass 4, and an intermediate sheet or layer 5 of known synthetic material.

Machine 1 comprises a frame or bed 6; and a supporting and handling assembly 7 for supporting and handling sheet 2, and which is fitted to frame 6 and defines a supporting surface P for sheet 2. With reference to Figure 1, supporting and handling assembly 7 comprises two coplanar, side by side tables 10 and 11 spaced apart to define in between a gap 12 extending in a direction D.

Tables 10 and 11 are associated with respective known pressure assemblies 20 and 21 located over supporting surface P and movable to and from an extracted position to exert thrust on sheet 2 towards respective tables 10 and 11.

As shown in Figure 1, machine 1 also comprises a top scoring bridge 23 and a bottom scoring bridge 24 located on opposite sides of supporting surface P of sheet 2; and, for each bridge 23, 24, a respective known scoring device 25 having a swivel wheel 26 for forming a score line in the relative outer sheet 3, 4. Scoring devices 25 extend facing each other at gap 12, and are fitted to respective bridges 23, 24 by respective powered carriages 27, 28 movable back and forth along respective guides 29, 30 in a direction parallel to direction D. Each scoring device 25 is fitted to relative carriage 27, 28 to move, with respect to carriage 27, 28, to and from supporting surface P, in a direction perpendicular to supporting surface P and under the control of a respective, e.g. pneumatic, linear actuator 31.

As shown in Figures 1 and 2, machine 1 also comprises a sheet breaking device 32, in turn comprising, for each scoring device 25, a respective wheel 33, which is fitted to relative carriage 27, 28, is located adjacent to relative device 25, and is movable, with respect to relative carriage 27, 28 and by a respective actuator 34, to and from supporting surface P to break outer sheets 4 and 3 according to a break program described in detail below.

The break wheel 33 fitted to carriage 27 is an ordinary wheel or, conveniently, a wheel with two outer circumferential ribs or flanges spaced apart axially, i.e. along the axis of rotation of wheel 33, to act, in use, on two areas of sheet 3 on opposite sides of the score line, and hence the break, in sheet 3.

Alternatively, in a further variation, the wheel 33 fitted to carriage 27 is replaced by two coaxial wheels 33 spaced apart and astride the score line in sheet 3.

Regardless of whether a wheel 33 with outer circumferential ribs or flanges, or a pair of wheels is used, the distance between the ribs or between the pair of wheels is selected as a function of the thickness of sheet 4 to be broken. That is, when setting the machine, the wheel 33 with outer ribs is selected from a number of wheels with differently spaced ribs; whereas, when using two wheels 33, an adjusting device is provided to adjust the distance between wheels 33.

With reference to Figure 1, machine 1 also comprises a cutting assembly 35 for cutting intermediate layer 5. In addition to pressure assemblies 20 and 21, assembly 35 comprises a further known powered roller 36 facing and cooperating with pressure assembly 21 to move the part of sheet 2 with which it cooperates in a direction perpendicular to direction D.

Cutting assembly 35 also comprises a heating assembly 36a for locally heating intermediate layer 5.

With reference to Figure 2, heating assembly 36a comprises a known heat source 37; and a powered actuating and guide device 38 for moving heat source 37 between a forward heating position (Figure 2) and a withdrawn rest position (Figure 1) regardless of the position of carriages 27, 28 along the relative guides.

In the example described, device 38 comprises an articulated quadrilateral support 39 which lies in a plane T (Figure 1) parallel to direction D and sloping at a predetermined angle A with respect to supporting surface P, and comprises a movable rod 40, to which heat source 37 is connected integrally; and a number of arms 41, only one of which is shown in Figure 2. Each arm 41 is hinged at one end to rod 40 to rotate about a movable axis 40', and at the other end to the machine frame to rotate about a fixed hinge axis 40" perpendicular to plane T and parallel to axis 40'. Device 38 also comprises a linear actuator 42 hinged to frame 6 and to support 39 to rotate arms 41 about respective axes 40' and 40" in plane T and move source 37 between the heating and rest positions, while maintaining it parallel to itself and translating it parallel to the scoring direction D of sheets 3 and 4. The slope of plane T, the size of arms 41, and the position of hinge axes 40' and 40" are such as to prevent heat source 37 interfering with carriage 28 and respective devices 25 when carriage 28 is moving, and as the heat source moves between the heating and rest positions.

The cutting of sheet 2, resting on supporting surface P, will now be described as of the condition in which carriages 27 and 28 are set to a rest or zero position outwards of a peripheral edge of sheet 2.

As of the above position, respective score lines are made simultaneously in known manner in both outer sheets of glass 3 and 4. As it is scored, sheet 3 is simultaneously broken by wheel 33 of carriage 28, which is pushed in known manner against sheet 4 and follows relative score wheel 26. Once sheet 3 is scored and broken, score wheels 26 and break wheel 33 of carriage 28 are withdrawn, wheel 33 of carriage 27 is pressed against sheet 3, and carriages 27 and 28 are then moved back to the zero position, thus also breaking sheet 4 during the return stroke, and dividing sheet 2 into two portions indicated 1a and 1b in Figure 1 and resting on tables 10 and 11 respectively.

As soon as carriages 27 and 28 reach the zero position, i.e. complete a forward and return stroke, pressure assemblies 20 and 21 are activated in known manner to clamp sheet 2 on tables 10 and 11, and heat source 37 is moved into the forward heating position and activated to heat intermediate layer 5 as required. When heated to the required temperature, intermediate layer 5 is cut in known manner, after first activating roller 36 which, cooperating with pressure assembly 21, parts portion 1b from portion 1a, which remains clamped on table 10.

In a different cutting method, heat source 37 is conveniently moved into the heating position before or as sheet 4 is broken, thus reducing wait time even further by superimposing the heating operation on another operation performed on sheet 2. On machine 1 described, moving heating source 37 to and from the forward heating position before or as sheet 4 is broken is made possible by the design of heat assembly 36a and, in particular, of actuating and guide device 38, which prevents any interference between heat source 37 and carriage 28, regardless of the position of carriage 28.

In a variation not shown, break wheel 33 of carriage 28 is replaced by a known break bar, not described in detail, which is movable to and from supporting surface P and through gap 12 in a substantially vertical direction, and is tilted to break sheet 3 of glass gradually as soon as it is scored.

As will be clear from the above description, compared with known solutions, the cutting method described, and, in particular, simultaneously scoring and breaking one of the outer sheets of glass, provides, regardless of the cutting machine employed, for greatly reducing cycle time and so increasing output. In the example described, in fact, unlike known solutions, the top sheet 3 is broken, not during the return stroke of carriages 27, 28 to the zero position, but during the forward stroke which, in known solutions, provides solely for scoring the outer sheets of glass. As a result, the return stroke is left free for breaking the bottom outer sheet 4. As compared with known solutions, using a wheel 33 with outer circumferential ribs or two spaced-apart wheels to break sheet 4 greatly simplifies breaking and improves the break quality of sheet 4 in general, and especially in the case of a very thick sheet 4. This is mainly due to break pressure not being exerted at the score line and, more specifically, in the break area of sheet 3, but at a predetermined distance from the score line.

Regardless of the above advantages, machine 1 described also provides for further reducing cycle time by virtue of the design and location of heat assembly 36a, which allow heat source 37 to be moved into the forward heating position as soon as bottom sheet 4 is scored or as bottom sheet 4 is being broken. That is, heating assembly 36a on the machine is so located as to prevent any interference whatsoever between heat source 37, carriage 28, regardless of its position along relative guide 30, and the score and break wheels of carriage 28 in their withdrawn rest positions.

Clearly, changes may be made to machine 1 as described herein without, however, departing from the scope defined in the accompanying Claims.

More specifically, the movement of heat source 37 may be controlled by an actuating and guide device other than the one described by way of example, but still such as to move source 37 along a path sloping with respect to supporting surface P of the work sheet. Source 37 may even be located over supporting surface P and, hence, over work sheet 2. In which case, the outer sheet of glass scored and broken simultaneously is the bottom sheet.

As will be clear from the above description, the method described applies not only to cutting machines with a "horizontal" supporting surface, such as machine 1 described, but also to so-called vertical cutting systems, in which the sheet supporting surface is substantially or close to "vertical", and the scoring and breaking devices are located to the front and rear of the work sheet, but operate in practically the same way as on horizontal-supporting-surface machines.

## Claims

1. A method of cutting sheets (2) of laminated glass comprising two outer sheets (3)(4) of glass and an intermediate layer (5) of synthetic material, the method comprising the steps of forming a score line in both said outer sheets (3)(4) of glass; breaking, by flexing, the outer sheets (3)(4) of glass into two sheet portions (1a)(1b) joined by the intermediate layer of material; heating the intermediate layer of material connecting said sheet portions by means of a heat source (37); and cutting the intermediate layer of material to separate said sheet portions; **characterized in that** scoring at least a first (3) of said outer sheets of glass, and breaking the first outer sheet of glass are performed simultaneously.

2. A method as claimed in Claim 1, **characterized in that** simultaneous scoring and breaking of said first outer sheet of glass are performed on the outer sheet of glass opposite that facing said heat source.

3. A method as claimed in Claim 1 or 2, **characterized in that** heating said intermediate layer comprises the step of moving the heat source towards the sheet, and heating the heat source to a predetermined operating temperature; the movement of said heat source towards the sheet being commenced before breaking the outer sheet of glass facing said heat source.

4. A method as claimed in Claim 1 or 2, **characterized in that** heating said intermediate layer comprises the step of moving the heat source towards the sheet, and heating the heat source to an operating temperature; the movement of said heat source towards the sheet being commenced during breakage of the outer sheet facing said heat source.

5. A method as claimed in Claim 1 or 2, **characterized in that** heating said intermediate layer comprises the step of moving the heat source towards the sheet, and heating the heat source to an operating temperature; the movement of said heat source towards the sheet being commenced after both said outer sheets of glass are broken.

6. A method as claimed in any one of Claims 3 to 5, **characterized in that** said heat source is moved towards said sheet by moving the heat source along a plane (T) sloping with respect to said supporting surface (P), so as not to interfere with the scoring and breaking members.

7. A method as claimed in Claim 6, **characterized in that** said heat source is moved towards said sheet while maintaining the heat source parallel to itself and translating it in a direction parallel to a scoring direction of the outer sheets.

8. A method as claimed in any one of the foregoing Claims, **characterized in that** a second of said outer sheets of glass is broken by exerting thrust on two areas of said first outer sheet of glass, located on opposite sides of the score line or break line of said first outer sheet of glass.

9. A method as claimed in Claim 8, **characterized by** adjusting the distance between said two areas of said first outer sheet of glass as a function of the thickness of said second outer sheet of glass.

10. A machine for cutting sheets of laminated glass comprising two outer sheets (3)(4) of glass and an intermediate layer (5) of synthetic material, the machine (1) comprising a supporting surface (P) for supporting said sheet (2) of laminated glass; scoring means (25) for forming a score line in each of said outer sheets of glass; breaking means (32) for breaking both said outer sheets (3)(4) of glass along the respective score lines into two sheet portions (1a, 1b); and cutting means (35) for cutting said intermediate layer (5), said cutting means (35) comprising at least one heat source (37), and actuating means (38) for moving the heat source between a forward work position and a withdrawn rest position; **characterized in that** said actuating means comprise guide means (40, 41) for guiding said heat source along a sloping plane forming a given angle with said supporting surface.

11. A machine as claimed in Claim 10, **characterized in that** said guide means comprise an articulated parallelogram transmission.

12. A machine as claimed in Claim 11, **characterized in that** said articulated parallelogram transmission is designed to move said heat source in a vertical direction, and simultaneously translate it parallel to itself and to a scoring direction of the outer sheets of glass.

13. A machine as claimed in Claim 11 or 12, **characterized in that** said articulated parallelogram transmission comprises a movable crosspiece fitted with said heat source; and at least two arms hinged to said crosspiece and to a fixed support of said machine.

14. A machine as claimed in Claim 12, **characterized in that** said actuating means also comprise at least one linear actuator for rotating each of said arms about a respective fixed hinge axis.

15. A machine as claimed in any one of Claims 10 to 15, **characterized in that** said breaking means (32) comprise a wheel having two outer circumferential ribs spaced apart along an axis of rotation of the wheel.

16. A machine as claimed in any one of Claims 10 to 15, **characterized in that** said breaking means (32) comprise a pair of wheels spaced apart to act on areas of the outer sheet located on opposite sides of a relative said score line.

17. A machine as claimed in Claim 16, **characterized in that** said breaking means also comprise adjusting means for adjusting the distance between the wheels in said pair of wheels.
